# EUROPÄISCHE PATENTSCHRIFT

(11) **EP 1 613 875 B1**
(45) Veröffentlichungstag und Bekanntmachung des Hinweises auf die Patenterteilung: **30.08.2006**
(21) Anmeldenummer: 04724589.9
(22) Anmeldetag: 31.03.2004
(51) Int. Cl.: F16F 9/36, F16F 9/32, B60T 13/74, B60T 8/40, B60T 11/18, B60T 13/16

(54) **KOLBENEINRICHTUNG UND MIT EINER KOLBENEINRICHTUNG AUSGEFÜHRTE KOLBEN-ZYLINDER-ANORDNUNG**
PISTON SYSTEM AND A PISTON-CYLINDER DEVICE PROVIDED THEREWITH
SYSTEME DE PISTON ET DISPOSITIF PISTON-CYLINDRE EQUIPE D'UN SYSTEME DE PISTON

(30) Priorität: 11.04.2003 DE 10316838
(43) Veröffentlichungstag der Anmeldung: 11.01.2006
(73) Patentinhaber: Lucas Automotive GmbH, 56070 Koblenz (DE)
(72) Erfinder: GIERING, Wilfried, 56743 Mendig (DE); OHLIG, Benedikt, 56179 Vallendar (DE); MICHELS, Erwin, 56829 Kail (DE); STEINHEUER, Herbert, 53474 Bad Neuenahr (DE)
(74) Vertreter: Thum, Bernhard
(86) Internationale Anmeldenummer: PCT/EP2004/003430
(87) Internationale Veröffentlichungsnummer: WO 2004/090371

(56) Entgegenhaltungen:
- DE-A- 19 757 996
- DE-A- 19 832 036
- DE-A- 19 929 154
- DE-U- 29 518 171
- US-B1- 6 311 813

## Beschreibung

Die Erfindung betrifft eine Kolbeneinrichtung, insbesondere für eine Pedalsimulationsvorrichtung eines Fahrzeugbremssystems.

Bei Fahrzeugbremssystemen jüngerer Bauart ist es üblich, die auf ein Bremspedal ausgeübte Pedalbetätigungskraft elektronisch zu erfassen und anhand der erfassten Pedalbetätigungskraft eine Bremsanlage anzusteuern. Die eigentliche Pedalbetätigungskraft bleibt zur Erzeugung einer Bremskraft ungenutzt, das heißt sie dissipiert.

Dieses Prinzip wird beispielsweise bei elektrohydraulischen oder elektromechanischen Bremsanlagen eingesetzt. Um dennoch dem Fahrer eines Kraftfahrzeugs ein ihm von herkömmlichen Fahrzeugbremssystemen vertrautes Widerstandsverhalten des Bremspedals vermitteln zu können, werden Pedalsimulationsvorrichtungen eingesetzt, welche einen Pedalwiderstand, beispielsweise mit progressiver Kennlinie, simulieren. Derartige Pedalsimulationsvorrichtungen sind in der Regel mit Federelementen zur Erzeugung der Widerstandskraft ausgeführt. Darüber hinaus sehen derartige Pedalsimulationsvorrichtungen oftmals pneumatische Dämpfer vor, die das Widerstandsverhalten des Bremspedals sowie dessen Rückstellverhalten beeinflussen können. Zur Realisierung derartiger Dämpfungsvorrichtungen wird eine Kolbenscheibe einer Kolbeneinrichtung der eingangs bezeichneten Art innerhalb eines korrespondierenden Zylinders dichtend geführt. Beidseits der Kolbenscheibe bilden sich Arbeitskammern aus, wobei das darin enthaltene Fluid während einer Betätigung des Bremspedals verlagert wird. Diese Verlagerung kann beispielsweise mittels einer Drossel oder dergleichen gedämpft werden, wodurch das Widerstandsverhalten des Bremspedals unmittelbar beeinflusst wird. Es hat sich jedoch gezeigt, dass zur Realisierung derartiger Dämpfungsvorrichtungen verschiedene Komponenten erforderlich sind, wie beispielsweise Drosseleinrichtungen oder Rückschlagventile, die in zum Teil aufwendiger Weise derart anzubringen sind, dass sie die beiden beidseits der Kolbenscheibe vorhandenen Arbeitskammern fluidisch miteinander koppeln. Dies führt zu verhältnismäßig aufwendig gestalteten Pedalsimulationsvorrichtungen und damit zu einer unerwünschten Erhöhung der Herstellungskosten. Darüber hinaus erhöht sich mit zunehmender Zahl der eingesetzten Komponenten auch die Verschleißanfälligkeit und der Wartungsaufwand des Bremssystems.

Aus der DE 295 18 171 U1 ist eine Kolben-Zylinder-Anordnung für einen Öffnungsmechanismus eines Handschuhfachs eines Kraftfahrzeugs bekannt, deren Kolbeneinrichtung einen Kolbenschaft und eine an dem Kolbenschaft ausgebildete, sich in radialer Richtung erstreckende Kolbenscheibe aufweist, wobei die Kolbenscheibe eine nach außen geöffnete Radialnut besitzt, in welcher ein O-Ring aufgenommen ist. Der O-Ring kann sich in axialer Richtung innerhalb der Radialnut bewegen, wobei er in radialer Richtung in der Radialnut fest anliegt. Die Radialnut wird von axialen Schlitzen durchsetzt, deren Querschnittsfläche sich in axialer Richtung verändert. Je nach Axiallage des O-Rings innerhalb der Radialnut schließt der O-Ring an dem axialen Schlitz eine bestimmte Drosselöffnung ein, so dass in Abhängigkeit von der Axialstellung des O-Rings mit der Anordnung unterschiedliche Drosseleffekte erreicht werden können. Es ist jedoch bei jeder Axialstellung des O-Rings eine Drosselwirkung vorhanden.

Dokument US 6 311 813 B offenbart eine kolbeneinrichtung gemäß dem Oberbegriff von Anspruch 1.

Es ist eine Aufgabe der vorliegenden Erfindung, eine Kolbeneinrichtung der eingangs bezeichneten Art und eine mit einer derartigen Kolbeneinrichtung ausgeführte Kolben-Zylinder-Anordnung bereitzustellen, welche bei einfachem und kostengünstigem Aufbau eine zuverlässige Funktionsweise gewährleistet.

Diese Aufgabe wird durch eine Kolbeneinrichtung, insbesondere für eine Pedalsimulationsvorrichtung eines Fahrzeugbremssystems, mit den Merkmalen des Anspruchs 1 gelöst.

Ist eine derartige erfindungsgemäße Kolbeneinrichtung in eine korrespondierende Zylinderanordnung eingesetzt, so liegt der flexible Dichtring an der Innenwand des Zylinders an. Aufgrund seines Übermaßes gegenüber der Kolbenscheibe und aufgrund des axialen und radialen Spiels innerhalb der Radialnut kann er sich in der Radialnut verwerfen und dadurch eine fluidische Verbindung selbst zwischen den beidseits der Kolbenscheibe vorhandenen Axialkammern über die wenigstens eine in die Radialnut mündende Lüftungsöffnung sowie die Radialnut bereitstellen. Die Verwerfung des Dichtrings innerhalb der Radialnut bewirkt also, dass sich in einem Ruhezustand, in welchem keine Relativbewegung zwischen der Kolbeneinrichtung und dem Zylinder erfolgt, der verworfene Dichtring nicht über seinen gesamten Umfang dichtend sowohl an der Zylinderinnenwand als auch an einer Flanke der Radialnut anliegt. Vielmehr kommt es zu anlagefreien Bereichen, die dann in einem derartigen Ruhezustand einen Fluiddurchgang ermöglichen. Das Ausmaß der Verwerfung hängt von der Breite der Radialnut und den Abmessungen des Dichtrings, insbesondere von dessen axialem Spiel, sowie von dem Übermaß des Dichtrings bezüglich des Zylinderdurchmessers ab. Der Dichtring behält auch bei einer sehr langsamen Bewegung der Kolbenvorrichtung innerhalb des Zylinders seine verworfene Gestalt bei.

Wird allerdings die Kolbeneinrichtung innerhalb des Zylinders hinreichend schnell bewegt, so kommt es aufgrund der Reibungseffekte zwischen dem Dichtring und der Zylinderinnenwand, aufgrund der Trägheit des Dichtrings und aufgrund der sich aufbauenden Druckdifferenz auf beiden Seiten der Kolbenscheibe dazu, dass sich der Dichtring unter geringfügiger Deformierung und unter Ausnutzung des in der Radialnut vorhandenen axialen und radialen Spiels dichtend sowohl an die Zylinderinnenwand als auch an eine der Bewegung nachlaufenden Flanke der Radialnut anlegen kann.

Hierzu ist anzumerken, dass die Haftreibung des Dichtrings an der Zylinderinnenwand dadurch verhältnismäßig klein gehalten werden kann, dass aufgrund des axialen Spiels und der Verwerfung des Dichtrings dieser nur eine geringe Radialspannung besitzt. Somit drückt er auch nur mit relativ geringer Radialkraft auf die Zylinderinnenwand. Dies erklärt auch die Formstabilität bei einer langsamen Bewegung der Kolbeneinrichtung. Die Haftreibung und die Trägheit des Dichtrings reichen jedoch aus, um diesen über seinen vollen Umfang an die Zylinderinnenwand und die nachlaufende Flanke der Radialnut anzulegen, wenn die Kolbeneinrichtung hinreichend schnell verlagert wird. Sobald dieser Anlagezustand eingetreten ist, bewirkt eine aus einer weiteren Bewegung resultierende Druckdifferenz zwischen den beiden Arbeitskammern, dass der Dichtring stärker an die Zylinderinnenwand und die nachlaufende Flanke der Radialnut gedrückt wird. Dabei deformiert sich der Dichtring, was die Dichtungswirkung verstärkt.

Im Anlagezustand werden bei dieser Grundform der Erfindung fluidische Verbindungen zwischen den beiden Arbeitskammern beidseits der Kolbenscheibe über die wenigstens eine in die Radialnut mündende Lüftungsöffnung unterbunden. Die erfindungsgemäße Kolbeneinrichtung ermöglicht mit einfachen konstruktiven Mitteln eine Realisierung eines zuverlässig funktionierenden Ventils. Bei geeigneter Anordnung der Lüftungsöffnung lässt sich mit der erfindungsgemäßen Kolbeneinrichtung auch ein Rückschlagventil realisieren, welches bei einer hinreichend schnellen Bewegung der Kolbeneinrichtung lediglich in einer vorbestimmten Richtung einen Fluiddurchgang ermöglicht und in der jeweils anderen Richtung einen Fluiddurchgang entsprechend der vorangegangenen Schilderung blockiert.

In einer Weiterbildung der Erfindung ist vorgesehen, dass die Radialnut von einem in einem achsenhaltenden Schnitt betrachtet U-förmigen Außenbereich der Kolbenscheibe gebildet ist. Durch diese Maßnahme lässt sich der Dichtring sicher in der Radialnut halten. Ferner ist gewährleistet, dass definierte Anlageflächen, das heißt Flanken, der Radialnut für eine dichtende Anlage zur Verfügung stehen.

Hinsichtlich der wenigstens einen Lüftungsöffnung ist in einem Ausführungsbeispiel der Erfindung vorgesehen, dass sich diese in im Wesentlichen radialer Richtung durch den Querschenkel des in einem achsenthaltenden Schnitt betrachtet U-förmigen Außenbereich erstreckt. Mit anderen Worten handelt es sich bei der wenigstens einen Lüftungsöffnung um eine Radialbohrung, welche eine Seite der Kolbeneinrichtung mit dem Innenraum der Radialnut verbindet. Die Wahl der Seite, von welcher die Lüftungsöffnung ausgeht, ist maßgeblich für die Funktion als Rückschlagventil. Alternativ können auch eine Mehrzahl von Lüftungsöffnungen vorgesehen sein, die sich in radialer oder/und axialer Richtung in die Radialnut erstrecken. So kann beispielsweise eine Flanke mehrfach durchbrochen sein oder käfigartig ausgebildet sein.

Eine Weiterbildung der Erfindung sieht wenigstens eine Drosseleinrichtung vor, welche eine fluidische Verbindung zwischen beiden Axialseiten der Kolbenscheibe zulässt. Zusätzlich zu dem über den Dichtring realisierten Ventil kann somit das Verhalten einer mit einer erfindungsgemäßen Kolbeneinrichtung ausgeführten Pedalsimulationsvorrichtung auch noch über die wenigstens eine Drosseleinrichtung beeinflusst werden. Die Drosseleinrichtung kann beispielsweise beide Seiten der Kolbeneinrichtung fluidisch, jedoch gedrosselt, miteinander verbinden.

Die Drosseleinrichtung kann ein in der Kolbenscheibe vorgesehenes Drosselelement aufweisen. Um die erfindungsgemäße Kolbeneinrichtung weiter zu vereinfachen, kann die Drosseleinrichtung in Form einer oder mehrerer Drosselkanäle ausgebildet sein, die sich nutartig durch die Radialnut erstrecken. Diese Drosselkanäle sind derart ausgebildet, dass sie auch dann eine fluidische Verbindung zwischen den beiden Arbeitskammern zulassen, wenn der Dichtring an der Zylinderinnenwand und der nachlaufenden Flanke anliegt. Sie sind derart tief in die nachlaufende Flanke eingearbeitet, dass sie auch bei hohen Bewegungsgeschwindigkeiten der Kolbeneinrichtung und hohen Differenzdrücken zwischen beiden Arbeitskammern dauerhaft offen bleiben und ein vollständiges Verschließen durch deformierungsbedingt eindringendes Dichtringmaterial verhindert ist.

Eine Weiterbildung der erfindungsgemäßen Kolbeneinrichtung sieht vor, dass ein Sensorelement, insbesondere ein magnetisches Sensorelement, zur Erfassung der gegenseitigen Kolbenstellung an dieser angebracht ist. Dadurch kann eine Bremspedalbetätigung an der gegenwärtigen Kolbenstellung erfasst und ausgewertet werden. Ein entsprechend erhaltenes Signal kann beispielsweise zur Ansteuerung des von dem Bremspedal mechanisch entkoppelten weiteren Fahrzeugbremssystems genutzt werden.

Zur dichtenden Führung der Kolbeneinrichtung in oder an weiteren Komponenten des Fahrzeugbremssystems kann vorgesehen sein, dass an dem Kolbenschaft wenigstens ein Dichtelement angeordnet ist. Auch das Dichtelement kann derart ausgebildet sein, dass es sich in einer ihm zugeordneten Nut mit hinreichend großer axialer Erstreckung verwerfen kann. Darüber hinaus kann vorgesehen sein, dass der Kolbenschaft mit einem axialen Durchgang ausgebildet ist. Der axiale Durchgang kann beispielsweise zum Hindurchführen eines Krafteingangsglieds für ein nachgeschaltetes Bremssystem, beispielsweise einen Bremskrafterzeuger oder dergleichen, genutzt werden. Dieses Krafteingangsglied kann auch mechanisch mit der Kolbeneinrichtung gekoppelt sein.

Die Erfindung betrifft ferner zur Lösung der vorstehend genannten Aufgabe eine Kolben-Zylinder-Anordnung für ein Fahrzeugbremssystem, insbesondere für eine Pedalsimulationsvorrichtung eines Fahrzeugbremssystem, welches eine KoibeneinriChtüng der vorstehend beschriebenen Art und einen Zylinder aufweist. Bei diesem Aspekt der Erfindung nimmt der Zylinder die Kolbeneinrichtung derart auf, dass die Kolbenscheibe eine erste Arbeitskammer von einer zweiten Arbeitskammer trennt, wobei der flexible Dichtring mit einer Innenwand des Zylinders derart in Wechselwirkung tritt, dass er sich in einer Ruhestellung von Kolbeneinrichtung und Zylinder relativ zu einer zur Längsachse orthogonalen Radialebene verwirft und sich bei einer Relativbewegung zwischen der Kolbeneinrichtung und dem Zylinder in axialer Richtung dichtend an die Innenwand des Zylinders sowie an eine Flanke der Radialnut anlegt, sofern letztere keinen Drosselkanal aufweist.

Wie vorstehend bereits bezüglich der Kolbeneinrichtung allgemein ausgeführt, kommt es aufgrund des Übermaßes des Dichtrings relativ zu der Innenwand des Zylinders sowie der Radialnut zu einer Verwerfung des Dichtrings im Ruhezustand, das heißt dann, wenn sich die Kolbeneinrichtung und der Zylinder nicht relativ zueinander bewegen. Sobald jedoch die Kolbeneinrichtung innerhalb des Zylinders bewegt wird, führen die zwischen der Zylinderinnenwand und dem Dichtring auftretenden Reibungseffekte, die Trägheit des Dichtrings sowie die sich aufbauende Druckdifferenz zwischen beiden Arbeitskammern dazu, dass sich der Dichtring innerhalb der Radialnut deformiert und in Anlage mit einer Flanke der Radialnut in dichtenden Kontakt tritt. Dabei handelt es sich um die bezüglich der jeweiligen Relativbewegung von Kolbeneinrichtung und Zylinder nachlaufende Flanke der Radialnut. Verharrt die Kolbeneinrichtung relativ zu dem Zylinder nach erfolgter Relativbewegung wieder in einer bestimmten Position, so kann sich der Dichtring, ggf. erst nach einiger Zeit und nach Abbau der Druckdifferenz zwischen beiden Arbeitskammern, beispielsweise über die Drosseleinrichtung, innerhalb der Radialnut verwerfen, so dass es wieder über die wenigstens eine in die Radialnut mündende Lüftungsöffnung zu filuidischem Kontakt zwischen den beiden Arbeitskammern kommen kann.

Der Dichtring sowie die Radialnut sind derart dimensioniert, dass sich der Dichtring bei einer Relativbewegung zwischen der Kolbenscheibe und dem Zylinder unter Ausnutzung des in der Radialnut verfügbaren Spiels nach radial innen deformiert. Eine derartige Deformation nach radial innen erfolgt jedoch nicht unter radialer oder axialer Verwerfung sondern lediglich derart, dass der Dichtring geringfügig nach radial innen ausweicht, wobei er an der Innenwand des Zylinders über seinen gesamten Umfang harmonisch anliegt, sieht man von den gegebenenfalls vorhandenen Drosselkanälen ab.

In einer Weiterbildung der erfindungsgemäßen Kolben-Zylinder-Anordnung ist vorgesehen, dass die erste und die zweite Arbeitskammer über ein zusätzliches Fluidsystem fluidisch miteinander gekoppelt sind. Das Fluidsystem kann dabei ein Drosselelement aufweisen. Das Fluidsystem kann separat ausgebildet sein. Bevorzugt ist es jedoch an der Kolbeneinrichtung, insbesondere im Bereich der Kolbenscheibe ausgebildet, beispielsweise durch ein Drosselelement, das in einer Durchgangsbohrung angeordnet ist, welche sich in axialer Richtung durch die Kolbenscheibe hindurch erstreckt, oder durch die Drosselkanäle.

Neben der Dichtfunktion bzw. Ventilfunktion übernimmt der radial äußere Bereich der Kolbeneinrichtung mit dem in der Radialnut aufgenommenen Dichtring auch Führungsfunktion bei der Bewegung der Kolbeneinrichtung in dem Zylinder. Um die Präzision der Führung der Kolbeneinrichtung in dem Zylinder weiter zu verbessern, sieht eine Ausführungsform der Erfindung vor, dass der Kolbenschaft in einer Führungsbuchse des Zylinders in axialer Richtung geführt ist.

Wie vorstehend bereits angedeutet, kann die Kolbeneinrichtung zur Erfassung einer Bremspedalbetätigung über das Sensorelement genutzt werden. Korrespondierend sieht eine Weiterbildung der erfindungsgemäßen Kolben-Zylinder-Anordnung vor, dass an dem Zylinder ein Komplementär-Sensorelement vorgesehen ist, mittels welchem zur Erfassung der gegenwärtigen Stellung der Kolbeneinrichtung zu dem Zylinder die gegenwärtige Position des Sensorelements erfassbar ist.

Die Erfindung betrifft ferner eine Pedalsimulationsvorrichtung für ein Fahrzeugbremssystem, welche mit einer Kolben-Zylinder-Anordnung der vorstehend beschriebenen Art und insbesondere mit einer Kolbeneinrichtung der vorstehend beschriebenen Art ausgeführt ist.

Die Erfindung wird im folgenden beispielhaft anhand der beiliegenden Figuren erläutert. Es stellen dar:
- Fig.1: eine perspektivische Ansicht einer erfindungsgemäßen Kolbeneinrichtung;
- Fig.2: eine Längsschnittsansicht der erfindungsgemäßen Kolbeneinrichtung ent-sprechend der Schnittlinie II-II aus Fig.1 und
- Fig.3: eine Teilschnittansicht eines erfindungsgemäßen Fahrzeugbremssystems.

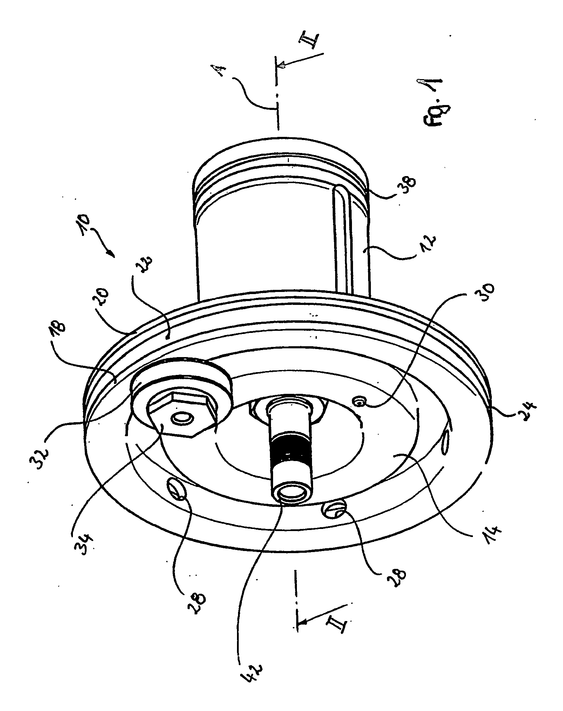

In den Figuren 1 bis 3 ist eine erfindungsgemäße Kolbeneinrichtung allgemein mit 10 bezeichnet. Diese umfasst einen Kolbenschaft 12 und eine an dem Kolbenschaft 12 ausgebildete sich im Wesentlichen in radialer Richtung von diesem aus erstreckende Kolbenscheibe 14.

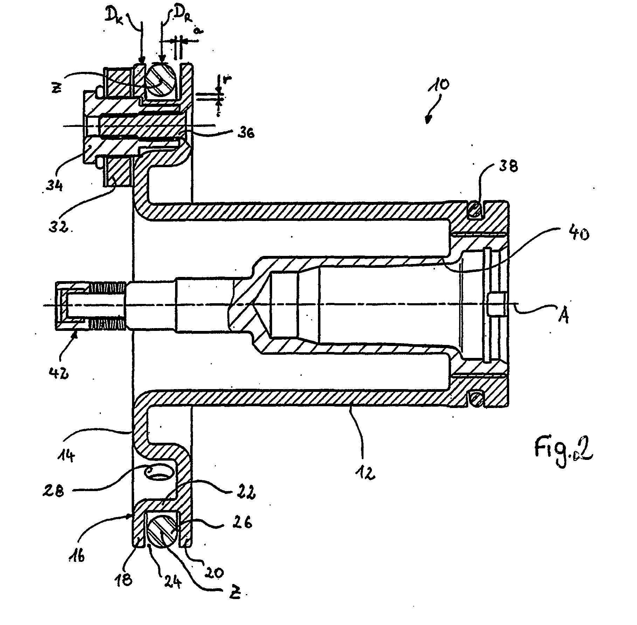

Betrachtet man insbesondere Fig.2 so erkennt man, dass die Kolbenscheibe 14 im Längsschnitt betrachtet mehrfach gekrümmten Verlauf aufweist und in ihrem radial äußeren Bereich mit einem U-förmigen Abschnitt 16 ausgebildet ist. Der in dem die Längsachse A enthaltenen Schnitt U-förmige Abschnitt weist zwei in radialer Richtung verlaufende Radialschenkel 18 und 20 auf, welche über einen parallel zur Längsachse A verlaufenden Querschenkel 22 miteinander verbunden sind. Die Radialschenkel 18 und 20 sowie der Querschenkel 22 bilden eine sich um die Längsachse A in Umfangsrichtung herum erstreckende Radialnut 24 aus, in der ein Dichtring 26 aufgenommen ist. Der Dichtring 26 ist mit einem axialen Spiel a und einem radialen Spiel r in der Radialnut 24 aufgenommen. Er ist aus einem gummielastischen Material ausgebildet und kann sich elastisch deformieren. Sein Außendurchmesser D_{R} ist größer bemessen als der Außendurchmesser D_{K} der Kolbenscheibe.

Durch den in der Schnittdarstellung als Querschenkel 22 bezeichneten Materialbereich erstrecken sich in Umfangsrichtung um die Längsachse A verteilt mehrere Radialbohrungen 28, welche die in Fig.2 linke Seite der Kolbenscheibe 14 mit dem Innenraum der Radialnut 24 fluidisch verbinden.

Ferner ist ein Drosselelement 30 (siehe Fig.1) vorgesehen, welches in einer axialen Durchgangsbohrung innerhalb der Kolbenscheibe 14 aufgenommen ist und für eine fluidische Verbindung zwischen der in Fig.1 und 2 linken und rechten Seite der Kolbenscheibe sorgen, allerdings mit stark reduziertem fluidisch wirksamem Durchmesser.

Die Figuren zeigen ferner ein magnetisches Sensorelement 32, welches über zwei gewindemäßig ineinandergreifende Bolzen 34 und 36 an der Kolbenscheibe 14 befestigt ist. Das Sensorelement 32 dient zur Erfassung der gegenwärtigen Position der Kolbeneinrichtung 10.

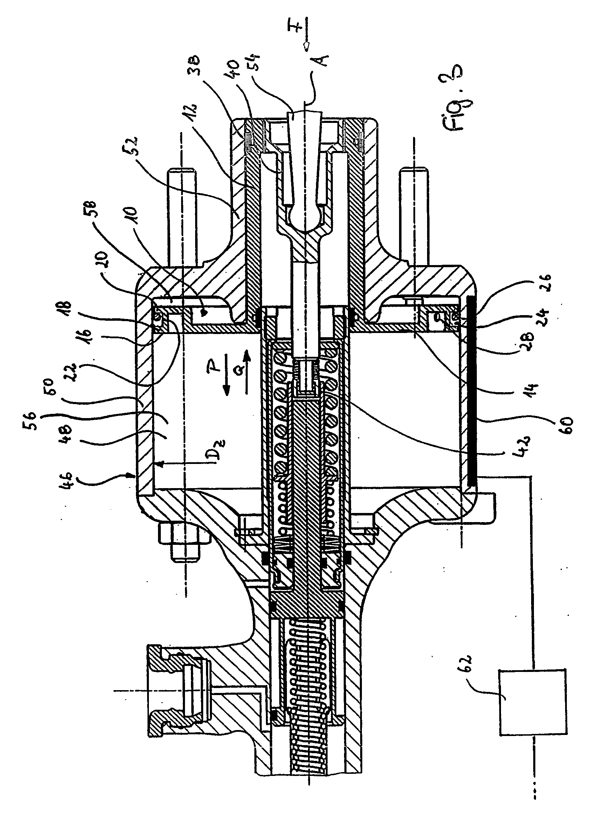

Schließlich ist Fig.2 zu entnehmen, dass an dem Kolbenschaft 12 Dichtmittel 38 in einem von der Kolbenscheibe 14 entfernten Bereich angeordnet sind. Auch diese ringförmig ausgebildeten Drehmittel sind in der ihnen zugeordneten Umfangsnut mit axialem Spiel aufgenommen, so dass sie sich wegen der Möglichkeit zur axialen Verwerfung und der daraus resultierenden reduzierten Radialspannung reibungsarm verhalten und dennoch Dichtwirkung entfalten. Darüber hinaus ist ein Kraftübertragungsglied 40 in die Kolbeneinrichtung 10 an deren in Fig.2 rechten Ende eingeschraubt. Das Kraftübertragungsglied 40 ist zur Kraftübertragung einer von einem nicht gezeigten Bremspedal eingeleiteten Bremskraft in eine in Fig.3 angedeutete nachgeschaltete Bremsanlage vorgesehen. Eine derartige Bremskrafteinteitung in die Bremsanlage kann gedämpft vermittels der Anordnung bei 42 erfolgen.

Zur Einbausituation und zum Betrieb der erfindungsgemäßen Kolbeneinrichtung im Rahmen einer mit einer Kolben-Zylinder-Anordnung ausgeführten Pedalsimulationsvorrichtung wird auf die Ansicht gemäß Fig.3 verwiesen. In dieser ist eine schematisch gezeigte erfindungsgemäße Kolbeneinrichtung 10 in einem Gehäuse 46 in Richtung der Längsachse A verschiebbar geführt. Das Gehäuse 46 umfasst einen Zylinder 50, der einen zylindrischen Hohlraum 48 umschließt, und eine den Schaft 12 der Kolbeneinrichtung 10 aufnehmende Führungsbuchse 52.

Die weiteren Komponenten der in Fig.3 lediglich zum Teil gezeigten Bremsanlage sollen nicht näher erläutert werden, da sie auf die Funktionsweise der Kolbeneinrichtung 10 in Wechselwirkung mit dem Zylinder 50 keinerlei Auswirkungen haben.

Der Außendurchmesser D_{R} des Dichtrings 26 ist gegenüber dem Innendurchmesser D_{Z} des Zylinders 50 überdimensioniert. In der in Fig.3 gezeigten Stellung, in welcher sich Kolbeneinrichtung 10 zunächst nicht gegenüber dem Zylinder 50 bewegt, kommt es aufgrund dieser Überdimensionierung des Dichtrings 26 zu einer Verwerfung in axialer Richtung, wie dies beispielsweise in Fig.2 gezeigt ist. Dies bedeutet, dass sich der Dichtring 26 mit einer bestimmten Niveaufaser, beispielsweise der zentralen Faser Z, nicht auf einer zur Längsachse A orthogonalen Ebene liegt sondern dass diese zentrale Faser Z mehrmals ihre Orientierung bezüglich einer zur Längsachse A orthogonalen Ebene ändert. Der Dichtring 26 verläuft somit unter durchgehend harmonischer Anlage an der Innenwand des Zylinders 50 bei Ruhestellung von Kolbeneinrichtung 10 und Zylinder 50 wellig innerhalb der Radialnut 24. Dieser wellige Verlauf ist möglich, da - wie vorstehend mit Bezug auf Fig.2 bereits angesprochen - der Dichtring 26 mit radialem Spiel r und axialem Spiel a innerhalb der Radialnut 24 aufgenommen ist. Durch die Möglichkeit der Verwerfung in axialer Richtung besitzt der Dichtring 26 im eingebauten Zustand eine relativ geringe Radialspannung und übt daher im Ruhezustand nur geringe Radialkräfte auf die Innenwand des Zylinders 50 aus. Demnach ist auch die zwischen dem Dichtring 26 und der Innenwand des Zylinders 50 auftretende Haft- und Gleitreibung relativ gering.

Kommt es nun zu einer schnellen Pedalbetätigung, weil über ein Krafteingangsglied 54 von einem Bremspedal auf das Kraftübertragungsglied 40 eine hinreichend hohe Bremsbetätigungskraft ausgeübt wird, so verlagert sich die Kolbeneinrichtung 10 bedingt durch die mechanische Kopplung von Kraftübertragungsglied 40 und Kolbenschaft 12 innerhalb des Gehäuses 46. Dabei bewegt sich auch die Kolbenscheibe 14 in entsprechender Weise in Richtung der Längsachse A. Der über seinen Umfang geschlossen, jedoch mit welligem Verlauf an der Innenwand des Zylinders 50 anliegende Dichtring 26 verharrt zu Beginn dieser Bewegung jedoch - soweit möglich - in seiner Position, da er mit der Innenwand des Zylinders 50 in Haftreibungseingriff steht und aufgrund seiner Trägheit. Dies führt dazu, dass er sich bei einer Bewegung entsprechend Pfeil P der Kolbenscheibe 14 in axialer Richtung schließlich über seinen gesamten Umfang an die in Fig.3 linke Flanke des radialen Schenkels 20 des im Längsschnitt U-förmigen Abschnitts 16 anlegt. Diese Flanke wird bei einer Bewegung der Kolbeneinrichtung 10 in Richtung von Pfeil P als nachlaufende Flanke der Radialnut 24 bezeichnet. Die Anlage des Dichtrings 26 sowohl an der Innenwand des Zylinders 50 als auch an dem Radialschenkel 20 ist jeweils dichtend. Aufgrund seines Übermaßes verformt sich der Dichtring 26 geringfügig nach radial innen, er nimmt jedoch keinen welligen Verlauf mehr ein. Durch die dichtende Anlage des Dichtrings 26 an der Innenwand des Zylinders 50 und dem Radialschenkel 20 ist die Kolbenscheibe 14 dichtend innerhalb des Zylinders 50 geführt. Die beiden links und rechts der Kolbenscheibe 14 in den Zylinder 50 eingeschlossenen Kammern 56 und 58 sind somit dichtend voneinander getrennt.

Eine weitere Bewegung der Kolbeneinrichtung 10 in axialer Richtung entsprechend Pfeil P führt dazu, dass sich in der Arbeitskammer 58 ein Unterdruck und in der Arbeitskammer 56 ein Überdruck aufbaut. Dieser Überdruck hat auch zur Folge, dass der Dichtring 26 stärker in Anlage mit der Innenwand des Zylinders 50 und der nachlaufenden Flanke der Radialnut 24 gedrückt wird, was dessen Dichtwirkung weiter erhöht. Wegen des sich aufbauenden Unterdrucks steigt der Widerstand, welchen der Fahrer über das Krafteingangsglied 54 am Bremspedal spürt. Zur Beeinflussung dieses Widerstands wird Fluid aus der Arbeitskammer 56 über die Drosseleinrichtung 30 in die Arbeitskammer 58 übergeführt, allerdings gedrosselt.

Sobald das Bremspedal freigegeben wird, bewegt sich die Kolbeneinrichtung 10 mit der Kolbenscheibe 14 unter Wirkung von nicht näher gezeigten Rückstellfedern entsprechend Pfeil Q in ihre Ausgangsstellung zurück. Auch dabei kommt es zu dem vorstehend beschriebenen Effekt, der Verlagerung des Dichtrings 26 innerhalb der Radialnut 24 unter Haftreibungswirkung bis er sich an die an dem Schenkel 18 ausgebildete Flanke der Radialnut anlegt. Allerdings führt dieser Effekt nicht zu einer Abdichtwirkung der Arbeitskammer 56 bezüglich der Arbeitskammer 58, da Fluid aus der Kammer 58 an dem radial äußeren Rand des Radialschenkels 20 vorbei durch die Radialnut 24 hindurch sowie durch die Axialbohrungen 28 in die Kammer 56 einströmen kann und für einen Druckausgleich sorgen kann. Eine Rückstellbewegung entsprechend Pfeil Q kann damit wesentlich schneller und ungedämpfter erfolgen als eine Bewegung der Kolbeneinrichtung 10 entsprechend Pfeil P. Der Dichtring 26 erfüllt unter Zusammenwirkung mit der Radialnut 24 und der Schenkel 18 und 20 die Funktion eines Rückschlagventils, welches in Bewegungsrichtung P dichtend sperrt und in Bewegungsrichtung Q eine Fluidströmung zwischen den beiden Arbeitskammern 56 und 58 zulässt.

Es ist noch darauf hinzuweisen, dass an der Außenseite des Zylinders 50 eine Sensoreinrichtung 60 angeordnet ist, welche sich ebenfalls in Richtung der Längsachse A erstreckt und welche mit einer Steuereinheit 62 zur Signalübertragung gekoppelt ist. Die Sensoreinheit 60 erfasst die Position des in Fig.3 nicht gezeigten Sensorelements 32 und leitet diese an die Steuereinheit 62 weiter. Dadurch lässt sich zuverlässig eine Pedalbetätigung erfassen und parametrisieren. Die gewonnenen Signale können dann zur weiteren Ansteuerung des Fahrzeugbremssystems genutzt werden.

Ferner ist darauf hinzuweisen, dass der Radialschenkel 18 sowie der Querschenkel 22 nicht aus Vollmaterial ausgebildet sein müssen, sondern auch gitterartig oder mit mehreren Durchbrüchen ausgebildet sein können. Allein der Radialschenkel 20 muss eine Anlagefläche für den Dichtring 26 bereitstellen.

Mit der Erfindung lassen sich Pedalsimulationsvorrichtungen mit einer Kolben-Zylinder-Anordnung erheblich vereinfachen.

## Patentansprüche

1. Kolbeneinrichtung (10), insbesondere für eine Pedalsimulationsvorrichtung eines Fahrzeugbremssystems, mit einem in Richtung einer Längsachse (A) verlaufenden Kolbenschaft (12) und einer an diesem Kolbenschaft (12) ausgebildeten, sich in radialer Richtung erstreckenden Kolbenscheibe (14), wobei die Kolbenscheibe (14) einen radial äußeren Bereich (16) aufweist, in welchem eine nach außen geöffnete Radialnut (24) ausgebildet ist und wobei in der Radialnut (24) Dichtmittel (26) aufgenommen oder aufnehmbar sind; wobei die Dichtmittel einen flexiblen Dichtring (26) umfassen, der mit axialem (a) und radialem (r) Spiel in der Radialnut (24) aufgenommen oder aufnehmbar ist,
**dadurch gekennzeichnet, dass** der Außendurchmesser (D_{R}) des Dichtrings (26) den Außendurchmesser (D_{K}) der Kolbenscheibe (14) übersteigt, so dass sich der Dichtung (26) bei Kontakt mit einer auf die Kolbeneinrichtung abgestimmten Zylinderwand relativ zu einer zur Längsachse (A) orthogonalen Ebene verwirft, und wobei die Kolbenscheibe (14) mit wenigstens einer in die Radialnut (24) mündenden Lüftungsöffnung (28) versehen ist.

2. Kolbeneinrichtung (10) nach Anspruch 1,
**dadurch gekennzeichnet, dass** die Radialnut (24) von einem in einem achsenthaltenden Schnitt betrachtet U-förmigen Außenbereich (16) der Kolbenscheibe (14) gebildet ist.

3. Kolbeneinrichtung (10) nach Anspruch 2,
**dadurch gekennzeichnet, dass** sich die wenigstens eine Lüftungsöffnung (28) in im Wesentlichen radialer Richtung durch den Querschenkel (22) des in einem achsenthaltenden Schnitt betrachtet U-förmigen Außenbereich (16) erstreckt.

4. Kolbeneinrichtung nach Anspruch 1 oder 2,
**dadurch gekennzeichnet, dass** eine Mehrzahl von Lüftungsöffnungen vorgesehen sind, die sich in radialer oder/und axialer Richtung in die Radialnut erstrecken.

5. Kolbeneinrichtung (10) nach einem der Ansprüche 1 bis 4,
**gekennzeichnet durch** wenigstens eine Drosseleinrichtung (30), welche eine fluidische Verbindung zwischen beiden Axialseiten (56, 58) der Kolbenscheibe (14) zulässt

6. Kolbeneinrichtung (10) nach Anspruch 5,
**dadurch gekennzeichnet, dass** die Drosseleinrichtung ein in der Kolbenscheibe (14) vorgesehenes Drosselelement (30) aufweist.

7. Kolbeneinrichtung nach Anspruch 5 oder 6,
**dadurch gekennzeichnet, dass** die Drosseleinrichtung einen in der Radialnut vorgesehenen Drosselkanal aufweist.

8. Kolbeneinrichtung (10) nach einem der vorangehenden Ansprüche, **gekennzeichnet durch** ein Sensorelement (32), insbesondere ein magnetisches Sensorelement, zur Erfassung der gegenwärtigen Kolbenstellung.

9. Kolbeneinrichtung (10) nach einem der vorangehenden Ansprüche,
**dadurch gekennzeichnet, dass** an dem Kolbenschaft (12) wenigstens ein Dichtelement (38) angeordnet ist.

10. Kolbeneinrichtung (10) nach Anspruch 9,
**dadurch gekennzeichnet, dass** das Dichtelement (38) mit axialem Spiel in dem Kolbenschaft (12) aufgenommen ist und dass der Außendurchmesser des Dichtelements (38) den Außendurchmesser des Kolbenschafts (12) übersteigt.

11. Kolbeneinrichtung (10) nach einem der vorangehenden Ansprüche,
**dadurch gekennzeichnet, dass** der Kolbenschaft (12) mit einem axialen Durchgang ausgebildet ist.

12. Kolben-Zylinder-Anordnung, insbesondere für eine Pedalsimulationsvorrichtung eines Fahrzeugbremssystem, umfassend eine Kolbeneinrichtung (10) nach einem der vorangehenden Ansprüche und einen Zylinder (50), welcher die Kolbeneinrichtung (10) derart aufnimmt, dass die Kolbenscheibe (14) eine erste Arbeitskammer (56) von einer zweiten Arbeitskammer (58) trennt,
**dadurch gekennzeichnet, dass** der flexible Dichtring (26) mit einer Innenwand des Zylinders (50) derart in Wechselwirkung tritt, dass er sich in einer Ruhestellung von Kolbeneinrichtung (10) und Zylinder (50) relativ zu einer zur Längsachse (A) orthogonalen Radialebene verwirft und sich bei einer Relativbewegung zwischen der Kolbeneinrichtung (10) und dem Zylinder (50) in axialer Richtung (A) dichtend an die Innenwand des Zylinders (50) sowie die Radialnut (24) anlegt.

13. Kolben-Zylinder-Anordnung nach Anspruch 12,
**dadurch gekennzeichnet, dass** sich der Dichtring (26) bei einer Relativbewegung zwischen der Kolbenscheibe (14) und dem Zylinder (50) unter Ausnutzung des in der Radialnut (24) verfügbaren Spiels (r) nach radial innen deformiert.

14. Kolben-Zylinder-Anordnung nach Anspruch 12 oder 13,
**dadurch gekennzeichnet, dass** die erste und die zweite Arbeitskammer (56, 58) über ein zusätzliches Fluidsystem fluidisch miteinander gekoppelt sind.

15. Kolben-Zylinder-Anordnung nach Anspruch 14,
**dadurch gekennzeichnet, dass** das Fluidsystem ein Drosselelement (30) aufweist.

16. Kolben-Zylinder-Anordnung nach einem der Ansprüche 12 bis 15,
**dadurch gekennzeichnet, dass** der Kolbenschaft (12) in einer Führungsbuchse (52) des Zylinders (50) in axialer Richtung (A) geführt ist.

17. Kolben-Zylinder-Anordnung nach einem der Ansprüche 12 bis 16,
**dadurch gekennzeichnet, dass** an dem Zylinder (50) ein Komplementär-Sensorelement (60) vorgesehen ist, mittels welchem zur Erfassung der gegenwärtigen Stellung der Kolbeneinrichtung (10) zu dem Zylinder (50) die gegenwärtige Position eines an der Kolbenscheibe befestigen Sensorelements (32) erfassbar ist.

18. Pedalsimulationsvorrichtung für ein Fahrzeugbremssystem, ausgeführt mit einer Kolben-Zylinder-Anordnung nach einem der Ansprüche 12 bis 17.

## Claims

1. Piston device (10), in particular for a pedal simulation apparatus of a vehicle brake system, having a piston shank (12) extending in the direction of a longitudinal axis (A) and having a radially extending piston disk (14) formed on said piston shank (12), wherein the piston disk (14) has a radially outer region (16), in which an outwardly open radial groove (24) is formed, and wherein sealing means (26) are or may be accommodated in the radial groove (24), wherein the sealing means comprise a flexible sealing ring (26), which is or may be accommodated with axial (a) and radial (r) clearance in the radial groove (24),
**characterized in that** the outside diameter (D_{R}) of the sealing ring (26) exceeds the outside diameter (D_{K}) of the piston disk (14), so that the seal (26) upon contact with a cylinder wall tuned to the piston device distorts relative to a plane orthogonal to the longitudinal axis (A), and wherein the piston disk (14) is provided with at least one vent hole (28) opening into the radial groove (24).

2. Piston device (10) according to claim 1,
**characterized in that** the radial groove (24) is formed by a - viewed in an axis-containing section - U-shaped outer region (16) of the piston disk (14).

3. Piston device (10) according to claim 2,
**characterized in that** the at least one vent hole (28) extends in substantially radial direction through the transverse limb (22) of the - viewed in an axis-containing section - U-shaped outer region (16).

4. Piston device according to claim 1 or 2,
**characterized in that** a plurality of vent holes are provided, which extend in radial or/and axial direction into the radial groove.

5. Piston device (10) according to one of claims 1 to 4,
**characterized by** at least one throttle device (30), which allows a fluidic connection between both axial sides (56, 58) of the piston disk (14).

6. Piston device (10) according to claim 5,
**characterized in that** the throttle device comprises a throttle element (30) provided in the piston disk (14).

7. Piston device according to claim 5 or 6,
**characterized in that** the throttle device comprises a throttle channel provided in the radial groove.

8. Piston device (10) according to one of the preceding claims,
**characterized by** a sensor element (32), in particular a magnetic sensor element, for detecting the actual piston position.

9. Piston device (10) according to one of the preceding claims,
**characterized in that** at least one sealing element (38) is disposed on the piston shank (12).

10. Piston device (10) according to claim 9,
**characterized in that** the sealing element (38) is accommodated with axial clearance in the piston shank (12) and that the outside diameter of the sealing element (38) exceeds the outside diameter of the piston shank (12).

11. Piston device (10) according to one of the preceding claims,
**characterized in that** the piston shank (12) is designed with an axial passage.

12. Piston/cylinder arrangement, in particular for a pedal simulation apparatus of a vehicle brake system, comprising a piston device (10) according to one of the preceding claims and a cylinder (50), which accommodates the piston device (10) in such a way that the piston disk (14) separates a first working chamber (56) from a second working chamber (58),
**characterized in that** the flexible sealing ring (26) comes into interaction with an inner wall of the cylinder (50) in such a way that, in an idle position of piston device (10) and cylinder (50), it distorts relative to a radial plane orthogonal to the longitudinal axis (A) and, upon a relative movement between the piston device (10) and the cylinder (50) in axial direction (A), it moves into sealing abutment against the inner wall of the cylinder (50) as well as the radial groove (24).

13. Piston/cylinder arrangement according to claim 12,
**characterized in that**, upon a relative movement between the piston disk (14) and the cylinder (50), the sealing ring (26) deforms in a radially inward direction, utilizing the clearance (r) available in the radial groove (24).

14. Piston/cylinder arrangement according to claim 12 or 13,
**characterized in that** the first and the second working chamber (56, 58) are fluidically connected to one another by an additional fluid system.

15. Piston/cylinder arrangement according to claim 14,
**characterized in that** the fluid system comprises a throttle element (30).

16. Piston/cylinder arrangement according to one of claims 12 to 15,
**characterized in that** the piston shank (12) is guided in axial direction (A) in a guide bush (52) of the cylinder (50).

17. Piston/cylinder arrangement according to one of claims 12 to 16,
**characterized in that** on the cylinder (50) a complementary sensor element (60) is provided, by means of which, for detecting the actual position of the piston device (10) relative to the cylinder (50), the actual position of a sensor element (32) mounted to the piston disk is detectable.

18. Pedal simulation apparatus for a vehicle brake system, designed with a piston/cylinder arrangement according to one of claims 12 to 17.

## Revendications

1. Système de piston (10), notamment pour un système de simulation de pédale d'un système de freinage de véhicule, comprenant une tige de piston (12) qui s'étend en direction d'un axe longitudinal (A) et un disque de piston (14) qui est formé sur la tige de piston (12) et qui s'étend en direction radiale, le disque de piston (14) présentant une zone radialement externe (16), dans laquelle se trouve une rainure radiale ouverte vers l'extérieur (24) recevant ou pouvant recevoir des moyens d'étanchéité (26), lesdits moyens d'étanchéité comprenant un anneau d'étanchéité souple (26) logé ou pouvant être logé dans la rainure radiale (24) avec un jeu axial (a) et un jeu radial (r),
**caractérisé en ce que** le diamètre extérieur (D_{R}) de l'anneau d'étanchéité (26) est supérieur au diamètre extérieur (D_{K}) du disque de piston (14) si bien que l'anneau d'étanchéité se tord par rapport à un plan orthogonal à un axe longitudinal (A) lorsqu'il entre en contact avec une paroi de cylindre adaptée au système de piston, et le disque de piston (14) présentant au moins une ouverture d'aération (28) qui débouche dans la rainure radiale (24).

2. Système de piston (10) selon la revendication 1,
**caractérisé en ce que** la rainure radiale (24) est formée par une zone extérieure (16) qui, considérée dans une coupe axiale, a la forme d'un U.

3. Système de piston (10) selon la revendication 2,
**caractérisé en ce que** ladite ouverture d'aération (28) s'étend dans une direction pour l'essentiel radiale à travers la branche transversale (22) de la zone externe (16) qui, considérée dans une coupe axiale, a la forme d'un U.

4. Système de piston selon la revendication 1 ou 2,
**caractérisé en ce qu'**il est prévu plusieurs ouvertures d'aération s'étendant en direction radiale ou/et axiale et débouchant dans la rainure radiale.

5. Système de piston (10) selon l'une des revendications 1 à 4,
**caractérisé par** au moins un système d'étranglement (30) lequel autorise une liaison fluidique entre les deux côtés axiaux (56, 58) du disque de piston (14).

6. Système de piston (10) selon la revendication 5,
**caractérisé en ce que** le système d'étranglement présente un élément d'étranglement (30) prévu dans le disque de piston (14).

7. Système de piston selon la revendication 5 ou 6,
**caractérisé en ce que** le système d'étranglement présente un canal d'étranglement prévu dans la rainure radiale.

8. Système de piston (10) selon l'une des revendications précédentes,
**caractérisé par** un capteur (32), notamment un capteur magnétique, pour la détection de la position momentanée du piston.

9. Système de piston (10) selon l'une des revendications précédentes,
**caractérisé en ce qu'**au moins un élément d'étanchéité (38) est monté sur la tige de piston (12).

10. Système de piston (10) selon la revendication 9,
**caractérisée en ce que** l'élément d'étanchéité (38) est logé avec un jeu axial dans la tige de piston (12) et **en ce que** le diamètre extérieur de l'élément d'étanchéité (38) est supérieur au diamètre extérieur de la tige de piston (12).

11. Système de piston (10) selon l'une des revendications précédentes,
**caractérisé en ce qu'**un passage axial est ménagé dans la tige de piston (12).

12. Dispositif piston-cylindre, notamment pour un système de simulation de pédale d'un système de freinage de véhicule, comprenant un système de piston (10) selon l'une des revendications précédentes et un cylindre (50) qui renferme le système de piston (10) de telle manière que le disque de piston (14) sépare une première et une deuxième chambre de travail (56, 58),
**caractérisé en ce que** l'anneau d'étanchéité souple (26) entre en interaction avec la paroi interne du cylindre (50) de telle manière qu'il se tord par rapport à un plan radial orthogonal à l'axe longitudinal (A) lorsque le système de piston (10) et le cylindre (50) sont au repos, et qu'il vient s'appliquer de façon étanche sur la paroi interne du cylindre (50) et sur la rainure radiale (24) lors d'un mouvement relatif en direction axiale (A) entre le système de piston (10) et le cylindre (50).

13. Dispositif piston-cylindre selon la revendication 12,
**caractérisé en ce que** l'anneau d'étanchéité souple (26) se déforme radialement vers l'intérieur en direction radiale à la faveur du jeu (r) disponible dans la rainure radiale (24) lors d'un mouvement relatif entre le système de piston (10) et le cylindre (50).

14. Dispositif piston-cylindre selon la revendication 12 ou 13,
**caractérisé en ce que** la première et la deuxième chambre de travail (56, 58) sont fluidiquement reliées entre elles par un système fluidique supplémentaire.

15. Dispositif piston-cylindre selon la revendication 14,
**caractérisé en ce que** le système fluidique présente un élément d'étranglement (30).

16. Dispositif piston-cylindre selon l'une des revendications 12 à 15,
**caractérisé en ce que** la tige de piston (12) est guidée en direction axiale (A) dans une douille de guidage (52) du cylindre (50).

17. Dispositif piston-cylindre selon l'une des revendications 12 à 16,
**caractérisé en ce qu'**il est prévu sur le cylindre (50) un capteur complémentaire (60) au moyen duquel la position momentanée d'un capteur (32) fixé au disque de piston peut être reconnue pour détecter la position momentanée du système de piston (10) par rapport au cylindre (50).

18. Système de simulation de pédale pour un système de freinage de véhicule, équipé d'un dispositif piston-cylindre selon l'une des revendications 12 à 17.
